# EUROPEAN PATENT SPECIFICATION

(11) **EP 0 313 070 B1**
(45) Date of publication and mention of the grant of the patent: **12.01.1994**
(21) Application number: 88117570.7
(22) Date of filing: 21.10.1988
(51) Int. Cl.: A44C 27/00

(54) **Ornament and method of manufacturing the same**
Schmuckstück und Verfahren zu dessen Herstellung
Bijou et son procédé de fabrication

(30) Priority: 23.10.1987 JP 267959/87
(43) Date of publication of application: 26.04.1989
(73) Proprietor: THE FURUKAWA ELECTRIC CO., LTD., Tokyo 100 (JP); YAMAGUCHI PEARL CO., LTD., Watarai-gun Mie-ken (JP)
(72) Inventor: Ozawa, Kazuhiro, Hodogaya-ku Yokohama-shi Kanagawa-ken (JP); Nakajima, Etsuo, Nagoya-shi Aichi-ken (JP); Yamaguchi, Isao, Watarai-gun Mie-ken (JP)
(74) Representative: ter Meer, Nicolaus, Dipl.-Chem., Dr.

(56) References cited:
- EP-A- 0 187 452
- DE-A- 3 421 623
- DE-B- 1 181 467
- METALL. & HEIDELBERG& STOECKEL: "Anwendung von Memory-Legierungen inelektischen Schaltgeräten"
- MACHINE DESIGN. vol. 51, no. 24, 25 October 1979, CLEVELAND US pages 113 - 117;D.T.CURRY: "New uses for metals that remember"

## Description

### BACKGROUND OF THE INVENTION

The present invention relates to an improvement in ornaments. In particular, the invention provides a new function to ornaments by giving a new function of superelasticity to the wound ring component to be worn.

There are bracelets, rings, necklaces, etc. as the ornaments. In the case of, for example, a bracelet, the putting-on of said bracelet has been performed traditionally by allowing a pair of clasps on both ends of a core wire to engage with each other in a state where the core wires, such as a string or a chain being wound up around the arm. Also, in recent times, there has been known such one that permits the putting-on without using clasps on both ends of a core wire by allowing both ends to overlap and by winding to an approximately circular ring shape using spring materials with restorative property, such as a piano wire or stainless steel wire.

With the bracelet having clasps on both sides of a core wire, there are problems as follows:
(a) Because the putting-on and the taking-off of the bracelet are performed through the engagement of clasps, the putting-on and the taking-off of said bracelet are very troublesome.
(b) Because both ends of the bracelet formed into a size of a fixed length are fastened through the clasps_{,} there occurs an inconvenience that the bracelet cannot be put on the arm of other persons when it is made to meet the thickness of the arm of a particular wearer.
(c) Because the clasps are used, there is a drawback that the appearance as an ornament is injured by said clasps.

Moreover, with the bracelet formed into an approximately circular wound ring from which the crasps are detached by using spring materials with restorative property, such points as the putting-on and the taking-off are simple, the permissible range in the thickness or arm is wide, the clasps injuring the appearance can be detached, and the like are improved. However, due to fact that the quantity of elastic strain of spring materials made of piano wire or stainless steel wire is as low as about 0.5%, and that the elastic stress is high, a large force is necessary to expand the circular ring. Moreover, due to a large tightening force on the arm, the fit cannot be made sufficient which results in an unpleasant feeling. Still more, when repeating the expansion and the restoration of the circular ring, it tends not only to become large but also to break.

Metal, Vol. 39, No. 1 (1985) and Machine Design, Vol. 51, No. 24 (1979), 113-117, describe the use of shape-memory alloys in switch gear technology and other technical fields, such as hot-water valves, window openers and radiator fan clutches.

For the above reasons, there is a need for an ornament, such as an approximately circular ringlike bracelet etc. with which the putting-on and the taking-off can be made without using clasps etc. injuring the appearance, a large force is not needed to expand the circular ring, yet the fit is sufficient to give a comfortable feeling of fitness when putting on the arm etc., and still the permissible range in the thickness of arm etc. is very wide.

The invention has been made to solve the technical problems as described above.

### SUMMARY OF THE INVENTION

According to one aspect, the present invention provides an ornament comprising a metal alloy wire formed into a wound ring of an approximately circular ring shape with overlapping ends, which is characterized in that the metal alloy wire is a superelastic austenite metallic alloy wire which has an Af point not higher than about 0°C.

According to another aspect, the present invention provides a method of manufacturing such an ornament comprising the steps:
submitting a prime wire of a Ni-Ti-type alloy to cold processing reduction from 20% to 50% thereby forming a round or angular wire rod;
winding said rod around a stick or pipe with a fixed outer diameter;
heat treating said wound wire rod at 300 to 600°C until an austenite phase is formed in sufficient amount to give said ornament superelastic behaviour at room temperature.

### BRIEF DESCRIPTION OF THE DRAWINGS

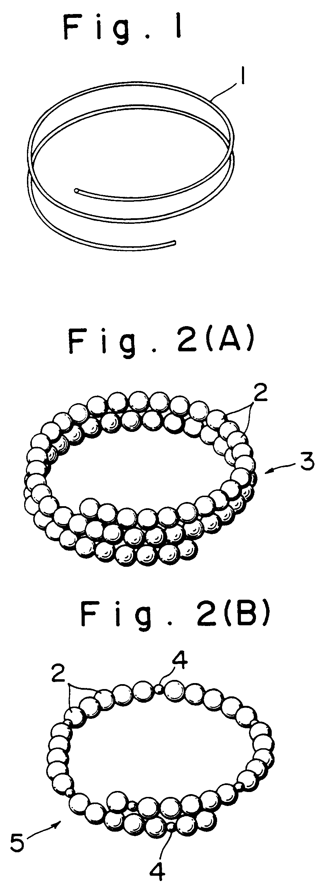

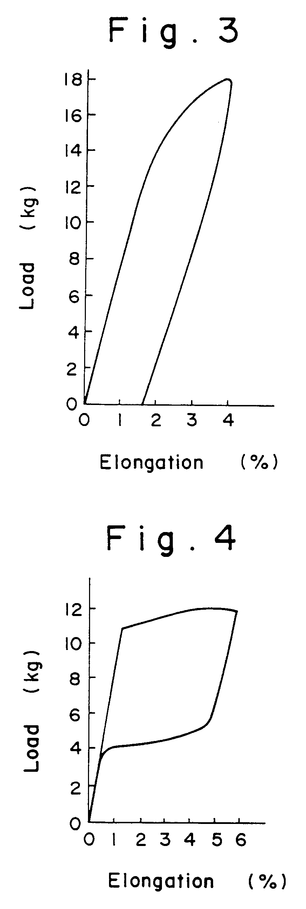

Fig. 1 and Fig. 2 (A) and (B) show the external appearances of ornaments according to the invention. Fig. 3 shows the relationship between stress and strain of a Ni49.4-Ti49.4-Fel.2 (in %,each) alloy at an elastic state of hardening treatment. Fig. 4 shows the relationship between stress and strain of the same alloy at a superelastic state.

### DETAILED DESCRIPTION OF THE INVENTION

In the invention, the reason why a metallic alloy wire which is a superelastic austenite metallic alloy wire having an Af point not higher than about 0°C is formed into a wound ring is as follows:
By providing beforehand a large strain-restoring characteristic, so-called superelastic characteristic (both characteristics of restoring characteristic amounting several percents due to the superelasticity and the characterixtic capable of restoring by a fixed stress as in the case of rubber) to the metallic alloy wire to be used for the wound ring, it is possible to make the ornament, with which the clasps become unnecessary resulting in the removal of the nuisance of putting-on and taking-off due to the clasps, the appearance becomes better as a result of detaching the clasps, the permissible range in the thickness of arm etc. becomes very wide, yet a comfortable feeling of fitness can be given, and, in addition, even when repeating the expansion and the restoration of the diameter of ring many times, there occurs no breaking and the diameter of the ring is also hard to change.

As the metallic alloy wires to be used here, to which the superelastic characteristic is given, for example Ni-Ti alloys, Ni-Ti-Cr alloys, Ni-Ti-Fe alloys, Ni-Ti-Co alloys, Cu-Al-Ni alloy and Cu-Zn-X(X=Si, Sn, Al, etc.) alloys are possible for use, but Ni-Ti type alloys are most suitable in the points of superelastic characteristic, corrosion resistance and light weight.

Specific alloy compositions suitable for the invention are Ni (50.7-51.5, in %)-Ti(49.3-48.5, in %) alloy (hereinafter, in% is omitted), Ni(48.0-51.0)-Ti(50.0-48.5)-Cr(0-2.5) alloy and Ni(47.0-51.0)-Ti(50.5-48.5)-Fe(0-2.5) alloy.

Moreover, in the invention, room temperature means a range from about 0 °C to the body temperature (36 °C). Furthermore, the statement that the superelastic effect is shown at room temperature means a phenomenon wherein several percents of strain are generated when applying the stress at room temperature and the strain restores to 0 when removing the stress. Still more, the reason why the metal alloy wire is a superelastic austenite metallic alloy wire is for the provision of a superelastic behaviour to the metallic alloy wire. The alloys of Ni-Ti type etc., as mentioned above, have undergone a phase transformation from the Martensite phase to the Austenite phase through the increase in temperature, but, in the case of metallic alloy wires for a wound ring according to the invention, it is required to establish the Af point (a temperature to complete the transformation to the Austenite phase) to not higher than 0 °C. The reason therefore is that au alloy wire comprising a Martensite phase at room temperature is soft and does not show the effect of superelasticity.

In the following, an explanation will be made about the elasticity of hardening treatment type and the superelasticity. For example, as shown in Fig. 3, the stress-strain curve of an alloy obtained by exerting the treatment as intense as 30 % to a Ni49.4-Ti49.4-Fel.2 alloy shows the elasticity of hardening treatment type having an elongation of 4% at ordinary temperature under a load of 18 kg. When decerasing the load to 0, however, 1.6 % strain remains showing no superelasticity. Whereas, when submitting this material to a heat treatment for 1 hour at a temperature of 500 °C, 6 % elongation is exhibited at room temperature under a load of about 12 kg, as shown in Fig. 4, and, when decreasing the load to 0, the elongation returns to 0 coming to have the superelasticity.

The gist of the invention lies in that a superelastic austenite metallic alloy wire which has an Af point not higher than 0°C is formed into a wound ring component to make ornaments such as bracelet, ring, necklace, etc. In this case, the shape of the section of the alloy wire may be round or angular. Moreover, in the invention, pearls or other ornamental articles may be attached to said wound ring, or the ring may be subjected to surface treatments such as gold plating etc. to enhance its value.

Next, the method of manufacturing the ornaments will be explained.

The constitution of the invention is as described above, and the reason why said Ni-Ti type alloys such as Ni-Ti alloy, Ni-Ti-Cr alloy, Ni-Ti-Fe alloy, Ni-Ti-Co alloy, etc. are used as the alloy wire rods is because of that they are overall superior as the ornaments in respect of the superelastic characteristic after the heat treatment, and the corrosion resistance on light weight.

Moreover, the reason why said alloy wire rod is first submitted to the cold processing reduction from 20 to 50 %, wound up around a stick or pipe with a fixed outer diameter and submitted to the heat treatment at 300 to 600 °C until an austenite phase is formed in sufficient amount is for giving said ornament superelastic behaviour at room temperature (about 0-36 °C). If the initial cold processing reduction is under 20 % or the temperature of the subsequent heat treatment is under 300 °C or over 600 °C, the characteristic of superelasticity becomes poor.

Moreover, if the initial cold processing reduction exceeds 50 %, the processing of the wire rod becomes difficult. Besides, the time for the heat treatment is preferable within the range of from 30 minutes to 2 hours.

According to the invention, the wire rod, after finishing the cold processing and after wound up around a stick or pipe with a fixed outer diameter, is submitted to the heat treatment. Here, the fixed outer diameter means the shape of aiming an ornament and is not confined to the values below. For example, the outer diameter is about 50 mm or so in the case of a bracelet, 16 mm or so in the case of a ring, or further the shape is a flat ellipse with a major axis of about 130 mm and a minor axis of about 100 mm or so.

Besides, the bracelet, necklace, etc. may be cut to a necessary number of turns, for example, 1.2 turns or 2.2 turns or so to make the wound shape ring component after they were wound up in many turns around a stick and submitted to the heat treatments, or they may be wound up around a stick etc. and submitted to the heat treatment fixing both ends thereof after they were cut to a fixed length (for example, 1.2 turns or 2.2 turns). In the cases of a ring etc. the latter is sametimes preferable.

The heating in the heat treatment is carried out by using an electric furnace etc., for example, when heating whole ring components of the ornaments such as bracelet, ring, etc. under same conditions, while it is carried out by the methods such as electric heating, gas flame heating, etc., which permit to heat locally, for example, when heating each portion of the ring componets of the ornaments such as necklace etc. under different conditions.

As described, by combining the alloy composition with the processing and heat treatment conditions, it is possible to give said ornament superelastic behaviour at about 0 °C or higher. That is to say, the ring component of the ornament exhibits superelastic behaviour whenever it is worn.

If following, one example of the invention will be illustrated.

### Example 1

A prime wire of Ni49.4-Ti49.4-Fel.2 (in%,each) with a wire diameter of 0.84 mm was subjected to the cold drawing and to the intermediate annealing for the cold processing at a rate of about 30 % and then formed into a wire diameter of 0.7 mm. This wire with 0.7 mm diameter was wound around a stick with 50 mm diameter and, restraining both ends of wire, it was heated for 60 minutes in an electric furnace of 500 °C to process the wire rod so that it shows the superelastic characteristic at 0 °C or higher. The Af point of this wire rod was 0 °C. The wire rod manufactured in this way was cut to make a ring component with a diameter of 50 mm and a number of turns of 2.2 as shown in Fig. 1. When loading this ring component at 20 °C to expand the diameter of ring from 50 mm to 100 mm and then unloading, the diameter returned to original 50 mm . As a result of having repeated such test 1000 times, the diameter of the ring remained to be 50 mm and proved not to deteriorate.

### Comparative example 1

A stainless steel wire with a wire diameter of 0.7 mm , which had been submitted to the cold processing, was wound up around a stick to make a ring component (comparative article 1) with a diameter of 50 mm and a number of turns of 2.2 as shown in Fig. 1. Also, a 30 % cold processed wire with a wire diameter of 0.7 mm, which comprises Ni49.4-Ti49.4-Fel.2(in %,each) alloy, was wound up around a stick to make a ring component (comparative article 2) with a diameter of 50 mm and a number of turns of 2.2.

When loading these comparative articles 1 and 2 at 20 °C to expand the diameter of the rings from 50 mm to 100 mm and then unloading, the diameter returned to original 50 mm , but, when repeating 30 times, it did not restore to the original diameter.

Besides, in the case of stainless steel wire, a larger force was needed to expand the circular ring.

### Example 2

A prime wire of Ni49.5-Ti49.5-Crl.0 alloy with a wire diameter of 0.84 mm was manufactured under similar conditions as in Example 1 and, by heating for 60 minutes in an electric furnace of 550 °C, a superelastic ring component (diameter: 50 mm ) was made. The Af point of this wire rod as ring component was -3 °C. A double-turn bracelet(3) (inner diameter: about 45 mm ) compactly threaded the pearls(2) on this ring component was made as shown in Fig. 2(A).

This bracelet (3) was expanded to an inner diameter of about 100 mm and put on the arm removing the load. At this time, the fit was sufficient without sliding down and comfortable feeling of fitness was obtained. Besides, the force to expand to 100 mm diameter was slight. Moreover, when loading this bracelet at 20 °C to expand the inner diameter from 45 mm to 100 mm and then unloading, the diameter returned to orginal 45 mm . As a result of having repeated such test 500 times, the inner diameter remained to be original 45 mm and proved not to deteriorate.

### Example 3

Similar treatments were given to the same Ni-Ti-Fe alloy wire as in Example 1 and a superelastic ring component with a diameter of 50 mm in a shape of winding of 1.2 turns was made up. A single-turn bracelet(5) disposed the pearls(2) and additionally other seven ornamental beads(4) in good appearance on said ring component was made as shown in Fig. 2(B).

This bracelet was excellent in external appearance since the crisps were not seen and the feeling when putting on the arm was also good.

Besides, this single-turn bracelet was tried to put on the arm and take off therefrom 100 times, but the deterioration of the feeling of fitness was not perceived proving to be good.

In accordance with the invention, due to the provision of the superelastic characteristic to the wound ring component of the ornament at room temperature by using a superelastic austenite metallic alloy wire, the wound ring can be put on and taken off without using the clasps etc. The invention provides therefore such excellent effects that the ornamental articles are excellent in the appearance, the permissible range in the thickness of arm etc. is also very wide, they fit perfectly to the arm etc. to produce comfortable feeling of fitness, yet the diameter of ring does not change despite the repeated putting-on and taking-off.

## Claims

1. An ornament comprising a metal alloy wire formed into a wound ring of an approximately circular ring shape with overlapping ends, **characterized in that** the metal alloy wire is a superelastic austenite metallic alloy wire which has an Af point temperature to complete the transformation to the Austenite phase not higher than about 0°C.

2. The ornament according to claim 1, wherein said superelastic metallic alloy wire is made of a Ni-Ti type alloy.

3. The ornament according to claim 1 or claim 2, wherein pearls or other ornamental articles are attached to the wire.

4. The ornament according to claim 1 or claim 2, wherein the ring has been subjected to a surface treatment such as plating.

5. A method of manufacturing the ornament of claim 1 comprising the steps:
submitting a prime wire of a Ni-Ti-type alloy to cold processing reduction from 20% to 50% thereby forming a round or angular wire rod; winding said rod around a stick or pipe with a fixed outer diameter; heat treating said wound wire rod at 300 to 600°C until an austenite phase is formed in sufficient amount to give said ornament superelastic behaviour at room temperature.

## Patentansprüche

1. Schmuckgegenstand, umfassend einen Metallegierungsdraht, welcher zu einem Wickelring einer in etwa kreisrunden Ringform mit überlappenden Enden ausgebildet ist, **dadurch gekennzeichnet**, daß der Metalllegierungsdraht ein Draht aus einer superelastischen Austenit-Metallegierung ist, welche einen Af-Punkt (Temperatur zur Vervollständigung der Transformation in die Austenit-Phase) von nicht höher als etwa 0°C besitzt.

2. Schmuckgegenstand nach Anspruch 1, wobei der Draht aus der superelastischen Metallegierung aus einer Legierung vom Ni-Ti-Typ hergestellt ist.

3. Schmuckgegenstand nach Anspruch 1 oder Anspruch 2, wobei Perlen oder andere Ziergegenstände an dem Draht befestigt sind.

4. Schmuckgegenstand nach Anspruch 1 oder Anspruch 2, wobei der Ring einer Oberflächenbehandlung, wie etwa einer Plattierung, unterzogen worden ist.

5. Verfahren zur Herstellung eines Schmuckgegenstands nach Anspruch 1, umfassend die Stufen:
Unterziehen eines Primärdrahts aus einer Legierung vom Ni-Ti-Typ einer Kaltverarbeitungsreduktion von 20 % bis 50 % unter Ausbildung eines runden oder eckigen Drahtstabs;
Wickeln des Stabs um eine Stange oder Röhre mit einem feststehenden Außendurchmesser herum;
Wärmebehandeln des aufgewickelten Drahtstabs bei 300 bis 600°C, bis eine Austenit-Phase in ausreichender Menge gebildet ist, um dem Schmuckstück superelastisches Verhalten bei Raumtemperatur zu verleihen.

## Revendications

1. Bijou comportant un fil d'alliage métallique formé sous forme d'un anneau enroulé ayant une forme approximativement d'anneau circulaire ayant des extrémités se recouvrant, caractérisé en ce que le fil d'alliage métallique est un fil d'alliage métallique austénitique super élastique qui a un point Af correspondant à la température pour réaliser la transformation vers la phase austénitique qui n'est pas plus élevée qu'environ 0°c.

2. Bijou selon la revendication 1, dans lequel ledit fil d'alliage métallique super élastique est réalisé d'un alliage du type Ni-Ti.

3. Bijou selon la revendication 1 ou 2, dans lequel des perles ou d'autres articles ornementaux sont fixés sur le fil.

4. Bijou selon la revendication 1 ou 2, dans lequel l'anneau a été soumis à un traitement de surface tel qu'un placage.

5. Procédé de fabrication d'un bijou selon la revendication 1 comportant les étapes consistant à:
soumettre un fil initial en alliage du type Ni-Ti à une réduction par traitement à froid de 20% à 50% en formant ainsi un fil laminé arrondi ou angulaire,
enrouler ladite tige autour d'un manche ou tuyau ayant un diamètre extérieur fixé,
traiter à chaud ladite tige formant fil enroulé de 300 à 600°c jusqu'à ce qu'une phase austénitique soit obtenue en quantité suffisante pour donner audit bijou un comportement super élastique à la température ambiante.
